# EUROPÄISCHE PATENTSCHRIFT

(11) **EP 1 629 621 B1**
(45) Veröffentlichungstag und Bekanntmachung des Hinweises auf die Patenterteilung: **24.06.2009**
(21) Anmeldenummer: 04723561.9
(22) Anmeldetag: 26.03.2004
(51) Int. Cl.: H04L 1/24, H04W 24/06

(54) **VERFAHREN UND TESTER ZUM BESTIMMEN EINER FEHLERRATE EINES MOBILFUNKGERÄTS BEI VARIABLER BLOCKZUORDNUNG**
METHOD AND TESTER FOR DETERMINING THE ERROR RATE OF A MOBILE RADIO DEVICE WITH VARIABLE BLOCK ALLOCATION
PROCEDE ET TESTEUR POUR DETERMINER UN TAUX D'ERREURS DANS UN APPAREIL DE RADIOTELEPHONIE MOBILE LORS DE L'AFFECTATION VARIABLE DE BLOCS

(30) Priorität: 04.06.2003 DE 10325288
(43) Veröffentlichungstag der Anmeldung: 01.03.2006
(73) Patentinhaber: Rohde & Schwarz GmbH & Co. KG, 81671 München (DE)
(72) Erfinder: PLAUMANN, Ralf, 85659 Forstern (DE); SCHINDLMEIER, Rudolf, 82205 Gilching (DE)
(74) Vertreter: Körfer, Thomas
(86) Internationale Anmeldenummer: PCT/EP2004/003251
(87) Internationale Veröffentlichungsnummer: WO 2004/109969

(56) Entgegenhaltungen:
- US-A1- 2001 052 091
- "Digital cellular telecommunications system (Phase 2+); Individual equipment type requirements and interworking; Special conformance testing functions (3GPP TS 44.014 version 4.2.0 Release 4); ETSI TS 144 014" ETSI STANDARDS, EUROPEAN TELECOMMUNICATIONS STANDARDS INSTITUTE, SOPHIA-ANTIPO, FR, Bd. 3-G2, Nr. V420, Juli 2002 (2002-07), XP014010543 ISSN: 0000-0001
- GOZALVEZ J ET AL: "On the effect of correlation in multislot link layer analysis for GPRS" IEEE VTS-FALL VTC 2000. 52ND, 24. September 2000 (2000-09-24), Seiten 444-450, XP010525204
- AJIG WESSAM; GODLEWSKI P.: "Effects of circuit switched transmissions over GPRS performance" PROCEEDINGS OF THE 3RD ACM INTERNATIONAL WORKSHOP ON MODELING, ANALYSIS AND SIMULATION OF WIRELESS AND MOBILE SYSTEMS, [Online] 2000, Seiten 20-26, Boston, Massachusetts, United States Gefunden im Internet: URL:http://doi.acm.org/10.1145/346855.3468 59>
- CHRISTIAN BETTSTETTER; HANS-JÖRG VÖGEL; JÖRG EBERSPÄCHER: "GSM PHASE 2+ GENERAL PACKET RADIO SERVICE GPRS: ARCHITECTURE, PROTOCOLS, AND AIR INTERFACE" IEEE COMMUNICATIONS SURVEYS, Bd. 2, Nr. 3, September 1999 (1999-09), Seiten 2-14,
- "UNDERSTANDING GENERAL PACKET RADIO SERVICE (GPRS), APPLICATION NOTE 1377" [Online] 28. Juni 2001 (2001-06-28), AGILENT TECHNOLOGIES, INC , USA Gefunden im Internet: URL:http://cp.literature.agilent.com/litwe b/pdf/5988-2598EN.pdf> [gefunden am 2006-11-21]
- AJIB W; GODLEWSKI P: "Service disciplines performance for WWW traffic in GPRS system" FIRST INTERNATIONAL CONFERENCE ON 3G MOBILE COMMUNICATION TECHNOLOGIES, 27. März 2000 (2000-03-27), Seiten 431-435,
- "TS 51.010 V5.3.0 Release 5, Seiten 366-404" April 2003 (2003-04), 3GPP , XP007904928

## Beschreibung

Die Erfindung betrifft ein Verfahren und einen Tester zum Bestimmen einer Fehlerrate eines Mobilfunkgeräts bei einer Datenübertragung mit variabler BLockzuordnung.

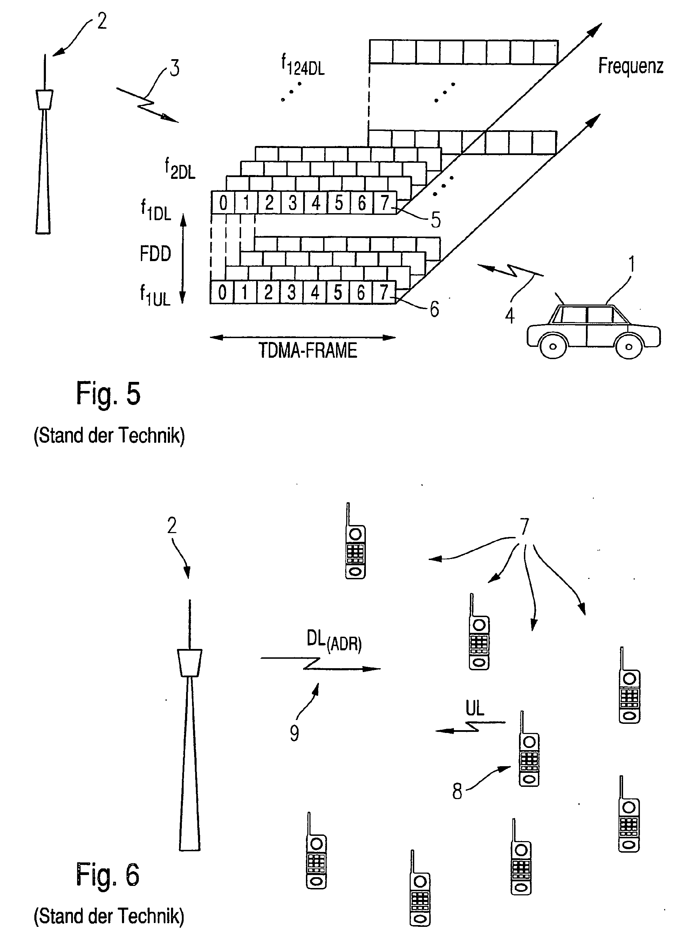

Der prinzipielle Aufbau eines bekannten GSM-Mobilfunksystems, wie es z.B. in "Digitale Mobilfunksysteme", Dr.-Ing. Klaus David und Dr.-Ing. Thorsten Benkner, B. G. Teubner Stuttgart 1996, Seite 326 bis 341, beschrieben ist, ist stark vereinfacht in Fig. 5 dargestellt. In einem solchen nach dem GSM-Standard aufgebauten Mobilfunksystem kommuniziert ein Mobilfunkgerät, welches sich beispielsweise in dem in der Fig. 5 dargestellten Fahrzeug 1 befindet, mit einer Basisstation 2.

Zur Übertragung von Informationen zwischen der Basisstation 2 und dem Mobilfunkgerät wird von der Basisstation 2 ein Downlink-Signal 3 an das Mobilfunkgerät und von dem Mobilfunkgerät ein Uplink-Signal 4 zurück zur Basisstation 2 gesendet. Um das Downlink-Signal 3 und das Uplink-Signal 4 voneinander zu trennen, werden beide Signale mit unterschiedlichen Trägerfrequenzen gesendet (FDD, Erequency Division Duplex).

Die Übertragung von Informationen in dem Downlink-Signal 3 und in dem Uplink-Signal 4 erfolgt nicht kontinuierlich, sondern in so genannten Bursts, wobei jeweils acht solcher Bursts eines Downlink-Signals 3 oder eines Uplink-Signals 4 zusammen einen Rahmen (Frame) bilden. Ein solcher Downlink-Rahmen ist in der Fig. 5 mit dem Bezugszeichen 5 und der entsprechende Uplink-Rahmen mit dem Bezugszeichen 6 bezeichnet, wobei jeder einzelne Burst in jeweils einem Zeitschlitz eines Rahmens übertragen wird. Die Zeitschlitze sind fortlaufend von 0 bis 7 durchnumeriert. Der Downlink-Rahmen 5 wird mit einer ersten Trägerfrequenz f_{1DL} und der Uplink-Rahmen 6 mit einer korrespondierenden Trägerfrequenz f_{1UL} übertragen.

Die Information wird lediglich in einzelnen Bursts des jeweiligen Downlink-Signals 3 bzw. Uplink-Signals 4 übertragen. Hierzu wird von der Basisstation 2 dem Mobilfunkgerät des Fahrzeugs 1 ein oder mehrere bestimmte Zeitschlitze 0 bis 7 des Rahmens zugeordnet. Jeder Zeitschlitz 0 bis 7 aufeinander folgender Downlink-Rahmen 5 und Uplink-Rahmen 6 bildet einen Übertragungskanal zum Austauschen von Informationen zwischen der Basisstation 2 und dem Mobilfunkgerät des Fahrzeugs 1. Für die erste Trägerfrequenz f_{1DL} und die korrespondierende Trägerfrequenz f_{1U} des Uplink-Signals 4 existieren also acht Übertragungskanäle, so dass acht Mobilfunkgeräte unabhängig voneinander Informationen mit der Basisstation 2 auf diesem Trägerfrequenzpaar austauschen können.

Zusätzlich zu der ersten Trägerfrequenz F_{1DL} und der korrespondierenden Trägerfrequenz F_{1UL} für das Uplink-Signal 4 sind weitere Trägerfrequenzen für das Downlink-Signal 3 und hierzu korrespondierende Trägerfrequenzen für das Uplink-Signal 4 vorgesehen. Für jedes der in der Fig. 5 dargestellten 124 Trägerfrequenzpaare bei GSM 900 ergeben sich aufgrund der TDMA-Struktur mit ihren acht Zeitschlitzen 0 bis 7 in einem Rahmen acht Übertragungskanäle, wobei alle Übertragungskanäle unabhängig voneinander sind. Aus den acht Übertragungskanälen für jedes Trägerfrequenzpaar ergeben sich damit zusammen mit den 124 unabhängigen Trägerfrequenzpaaren insgesamt 992 Übertragungskanäle.

Zur verbesserten Nutzung der Übertragungskapazität eines solchen Mobilfunksystems ist es bekannt, einen Übertragungskanal gleichzeitig für mehrere Mobilfunkgeräte zu verwenden. Innerhalb eines Übertragungskanals werden die Mobilfunkgeräte durch eine Basisstation adressiert und damit festgelegt, welches der mehreren Mobilfunkgeräte in welchen Zeitschlitzen von der Basisstation Daten empfängt.

Entsprechende Zeitschlitze vier aufeinander folgender Rahmen des Downlink-Signals 3 bzw. des Uplink-Signals 4 bilden zusammen einen Übertragungsblock des betreffenden Übertragungskanals. Für jeweils einen Übertragungsblock, welcher von der Basisstation gesendet wird, wird mit Hilfe eines Adresssignals ADR festgelegt, an welches der in demselben Übertragungskanal mit der Basisstation kommunizierenden Mobilfunkgeräte der Übertragungsblock von der Basisstation gesendet wird.

In Fig. 6 ist ein solches System wiederum stark vereinfacht dargestellt. Gezeigt sind insgesamt acht Mobilfunkgeräte 7 die gemeinsam einen Übertragungskanal nutzen, um mit der Basisstation 2 zu kommunizieren. Das bedeutet, dass ein bestimmter Zeitschlitz der Downlink-Rahmen 5 und der Uplink-Rahmen 6 für die Übertragung von Informationen zwischen den Mobilfunkgeräten 7 und der Basisstation 2 genutzt wird. Um in einem Übertragungsblock Daten von der Basisstation 2 an ein bestimmtes Mobilfunkgerät 8 zu senden, wird in jedem Übertragungsblock des Downlink-Signals 9 ein Adresssignal ADR gesendet, welches jeweils ein bestimmtes Mobilfunkgerät 8 adressiert. Durch Auswerten des Adresssignals ADR erkennt das Mobilfunkgerät 8, dass die in dem Übertragungsblock enthaltenen Informationen an dieses Mobilfunkgerät gesendet werden. Die übrigen Mobilfunkgeräte 7 erkennen das Adresssignal ADR nicht als das eigene und Verwerfen die Informationen des Übertragungsblocks. In welchen der Übertragungsblöcke die Mobilfunkgeräte 7 überhaupt ein Adresssignal ADR auswerten, wird jedem Mobilfunkgerät 7 beispielsweise beim Verbindungsaufbau von der Basisstation 2 mitgeteilt.

Mobilfunkgeräte sind dabei alle Teilnehmer-Endgeräte, die mit der Basisstation 2 kommunizieren. Die von dem Mobilfunkgerät 8 empfangenen Daten eines Übertragungsblocks werden mit Hilfe beispielsweise einer Prüfsumme auf Richtigkeit überprüft. Für jeden der empfangenen Übertragungsblöcke, die an das Mobilfunkgerät 8 adressiert waren, wird der Basisstation 2 auf Anfrage übermitteln, welche Übertragungsblöcke korrekt empfangen und ausgewertet wurden. Das Mobilfunkgerät 8 sendet hierzu auf Anfrage der Basisstation 2 Bestätigungssignale, beispielsweise für jeden korrekt ausgewerteten Übertragungsblock eine erste Kennzeichnung "ack" (acknowledged) und für jeden nicht korrekt ausgewerteten Übertragungsblock eine zweite Kennzeichnung "nack" (not acknowledged). Zur korrekten Übermittlung der vollständigen Information an das Mobilfunkgerät 8 wird jeder Übertragungsblock, für den die Basisstation 2 z. B. ein zweites Bestätigungssignal "nack" erhalten hat, erneut gesendet.

Bei der Entwicklung von Mobilfunkgeräten sowie der Überprüfung von Geräten in der Produktion ist es erforderlich, die Anzahl der nicht korrekt empfangenen und ausgewerteten Übertragungsblöcke festzustellen und in Relation zu der Zahl der insgesamt an dieses Mobilfunkgerät gesendeten bzw. adressierten Übertragungsblöcke zu setzen. Für eine so bestimmte Fehlerrate (BLER, Block Error Rate) ist in der Spezifikation beispielsweise für ein EGPRS-System eine zulässige Höchstgrenze von zehn Prozent (10%) bei einem bestimmten Pegel und bestimmten Ausbreitungsbedingungen festgelegt.

Der Teststandard aus dem Dokument ETSI TS 144 014 V4.2.0 (2002-07) Kapitel 5.1 und 5.2 offenbart eine "single-slot TCH loop", in der in einem Testmodus ein einzelner Übertragungskanal eines Mobilfunkgeräts unter Vernachlässigung der anderen Übertragungskanäle getestet wird. Desweiteren wird eine "multi-slot TCH loop" vorgestellt, in der in einem Testmodus in mehreren Übertragungskanälen einer Übertragungs frequenz Übertragungsblöcke an das Mobilfunkgerät gesendet werden.

Ein weiterer Teststandard aus der 3GPP TS 51.010-1 V5.3.0 (2003-04) bestimmt verschiedene Blockfehlerraten (BLER) bei jeweils unterschiedlichen physikalischen Übertragungsbedingungen, wie z.B. verschiedene Kodierungen und verschiedene Fadingbedingungen.

Die Veröffentlichung "Effects of Circuit Switched Transmissions over GPRS Performance" von Wessam Ajib und Phillippe Godlewski des Computersciences and networks Department der Ecole Nationale Superieure des Telecommunications Paris in Frankreich schlägt eine Aufteilung der Übertragungskapazitäten zwischen circuitswitched (CS) Übertragungen und packet-switched (PS) Datenübertragungen in einem GPRS System in einen festen CS übertragungsteil, einen festen PS Übertragungsteil und einen dritten Übertragungsteil, der die verfügbaren Übertragungskanäle und Übertragungsblöcke zwischen PS und CS übertragenen Daten dynamisch und nach Bedarf aufteilt. Nach jedem übertragenen Übertragungsblock wird die Anzahl der in einem Übertragungskanal angesprochenen Mobilfunkgeräte gemäß der Kapazitäten des PS-Teils des dritten Übertragungsteils und entsprechend der zu übertragenden Daten angepasst.

Der Erfindung liegt die Aufgabe zugrunde, ein Verfahren sowie einen Tester zum Ermitteln einer Fehlerrate zu schaffen, mit dem die Fehlerrate für verschiedene Anforderungen an das Mobilfunkgerät ermittelt werden kann.

Die Aufgabe wird durch das erfindungsgemäße Verfahren nach Anspruch 1 sowie den erfindungsgemäßen Tester nach Anspruch 4 gelöst.

Erfindungsgemäß werden zum Ermitteln einer Fehlerrate eines Mobilfunkgeräts an das Mobilfunkgerät adressierte Übertragungsblöcke nacheinander gesendeter Multiblocks an das Mobilfunkgerät gesendet wobei jeweils ein Multiblock eine feste Anzahl von Übertragungsblöcken enthält. Es wird eine Anzahl von Obertragungsblöcken pro Multiblock festgelegt, die an das Mobilfunkgerät adressiert werden. Für zeitlich nacheinander liegende Multiblocks desselben Übertragungskanals wird die Anzahl der an das Mobilfunkgerät gesendeten und adressierten Übertragungsblöcke verändert. Für jeden der verwendeten Übertragungskanäle wird die Anzahl und eine Verteilung der Übertragungsblöcke, die an das zu testende Mobilfunkgerät gesendet und adressiert werden, gleich festgelegt und die Anordnung der Übertragungsblöcke innerhalb eines Multiblocks erfolgt zufällig. Es wird ermittelt, ob das Mobilfunkgerät diese Übertragungsblöcke korrekt empfangen und ausgewertet hat. Es wird dabei die Anzahl der nicht korrekt ausgewerteten Übertragungsblöcke, die das zu testende Mobilfunkgerät adressierten, aus der jeweils zurückgesendeten Kennzeichnung "ack" oder "nack" ermittelt und aus dieser Anzahl die Fehlerrate des Mobilfunkgeräts bestimmt.

Bei der Auswertung der in einem Übertragungsblock enthaltenen Daten ist das Mobilfunkgerät einem besonders großen Stress unterworfen, wenn sämtliche gesendeten Übertragungsblöcke ein Adresssignal ADR enthalten, welches das zu testende Mobilfunkgerät adressiert. Erfindungsgemäß wird daher die Anzahl derjenigen Obertragungsblöcke eines Multiblocks festgelegt, die das zu testende Mobilfunkgerät adressieren. Ein Multiblock besteht dabei aus einer festen Anzahl aufeinander folgender Übertragungsblöcke eines Übertragungskanals. Durch dieses variable Festlegen der Anzahl an Übertragungsblöcken mit einem Adresssignal ADR, das das zu testende Mobilfunkgerät adressiert, lässt sich gezielt der Stress für das zu testende Mobilfunkgerät beeinflussen. Damit sind beispielsweise auch Auswertungen hinsichtlich eines Anstiegs der Fehlerrate mit zunehmendem Stress möglich.

Die Unteransprüche betreffen vorteilhafte Weiterbildungen des erfindungsgemäßen Verfahrens und des erfindungsgemäßen Testers.

In der nachfolgenden Beschreibung wird die Erfindung anhand der Zeichnung im Detail erläutert. Es zeigen :
- Fig. 1: eine schematische Darstellung eines von einer Basisstation an ein Mobilfunkgerät übertragenen Signals,

- Fig. 2: eine schematische Darstellung von mehreren Übertragungsblöcken im jeweils einem Übertragungskanal,
- Fig. 3: eine vereinfachte schematische Darstellung eines erfindungsgemäßen Testers,
- Fig. 4: Beispiele für die Adressierung einer unterschiedlichen Anzahl von Übertragungsblöcken jeweils eines Multiblocks sowie deren unterschiedliche Anordnung an das zu testende Mobilfunkgerät,
- Fig. 5: eine schematische Darstellung der Übertragung von Informationen in einem Mobilfunksystem nach dem GSM-Standard, und
- Fig. 6: eine schematische Darstellung zur Übertragung von Informationen zwischen einer Basisstation und mehreren Mobilfunkgeräten in einem Übertragungskanal.

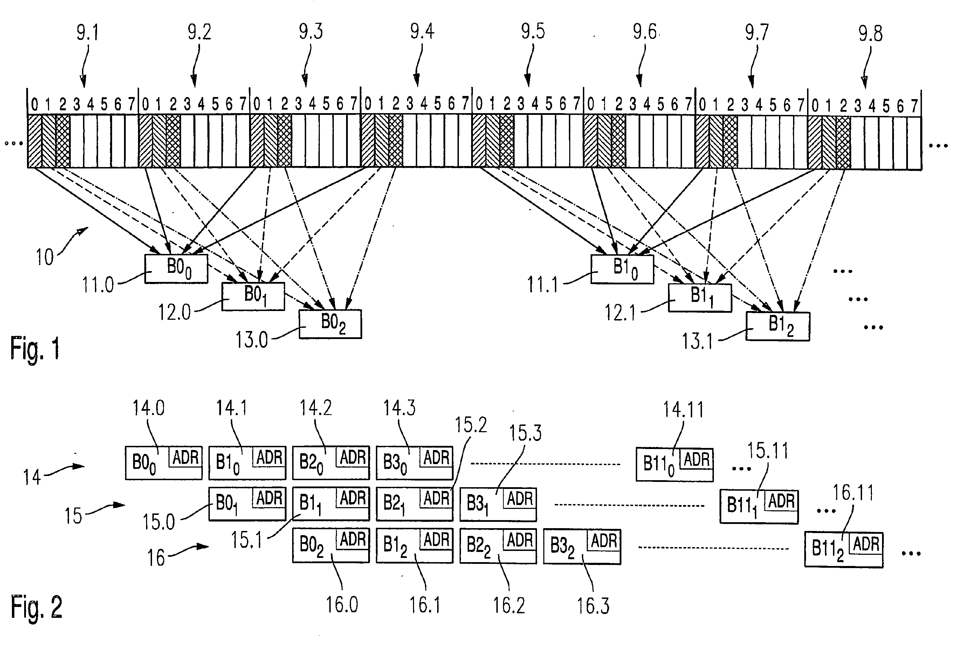

In Fig. 1 ist noch einmal die Struktur beispielsweise eines Downlink-Signals dargestellt. Das gesamte Signal besteht aus einer Aneinanderreihung von einzelnen Rahmen, wobei acht Rahmen 9.1 bis 9.8 dargestellt sind und jeder Rahmen 9.1 bis 9.8 wiederum unterteilt ist. Die Unterteilung der Rahmen 9.1 bis 9.8 erfolgt in Zeitschlitze, wobei jeweils acht Zeitschlitze zusammen einen Rahmen ergeben. Die einzelnen Zeitschlitze sind fortlaufend von 0 bis 7 numeriert.

Die kleinste Informationseinheit, die zwischen der Basisstation 2 und einem Mobilfunkgerät übertragen werden kann, wird durch einen Übertragungsblock gebildet. Ein solcher Übertragungsblock besteht aus jeweils einem bestimmten Zeitschlitz in vier aufeinanderfolgenden Rahmen. Drei Beispiele solcher Übertragungsblöcke sind in der Fig. 1 für die ersten vier Rahmen 9.1 bis 9.4 beispielhaft dargestellt. Ein erster Übertragungsblock 11.0 (B0₀) wird beispielsweise aus den Zeitschlitzen mit der Nummer 0 der vier Rahmen 9.1 bis 9.4 gebildet.

Ein zweiter Übertragungsblock 12.0 (B0₁) wird dementsprechend durch die Zeitschlitze mit der Nummer 1 in denselben Rahmen 9.1 bis 9.4 gebildet, während der dritte im Beispiel dargestellte Übertragungsblock 13.0 (B0₂) durch die Zeitschlitze mit der Nummer 2 in den Rahmen 9.1 bis 9.4 gebildet wird.

Entsprechend werden durch die Rahmen 9.5, 9.6, 9.7 und 9.8 mit den Zeitschlitzen der Nummern 0, 1 und 2 die drei weiteren Übertragungsblöcke B1₀, B1₁ und B1₂ gebildet. Wie bereits einleitend ausgeführt wurde, bilden entsprechende Zeitschlitze aufeinander folgender Rahmen 9.1 bis 9.8 einen Übertragungskanal, in dem ein-Mobilfunkgerät mit einer Basisstation kommuniziert. In dem dargestellten Beispiel sind also jeweils zwei aufeinander folgende Übertragungsblöcke 11.0 (B0₀) und 11.1 (B1₀) für einen ersten Übertragungskanal, 12.0 (B0₁) und 12.1 (B1₁) für einen zweiten Übertragungskanal und 13.0 (B0₂) und 13.1 (B1₂) für einen dritten Übertragungskanal dargestellt.

Die Kommunikation zwischen einem Mobilfunkgerät und der Basisstation 2 ist dabei nicht auf einen einzelnen solchen Übertragungskanal beschränkt. Vielmehr kann zur Erhöhung von zwischen dem Mobilfunkgerät und der Basisstation 2 übertragbaren Datenmengen eine beliebige Anzahl von Zeitschlitzen 0 bis 7 der Rahmen 9.1 bis 9.8 zu Kommunikation zwischen dem Mobilfunkgerät und der Basisstation 2 genutzt werden. Die Anzahl der Zeitschlitze 0 bis 7, in denen ein Mobilfunkgerät mit der Basisstation 2 kommuniziert, kann also zwischen einem und allen 8 Zeitschlitzen 0 bis 7 eines Rahmens variieren.

Zum Beispiel könnten alle drei in der Fig. 1 dargestellten Übertragungskanäle mit den Übertragungsblöcken 11.0 und 11.1 des ersten Übertragungskanals, den Übertragungsblöcken 12.0 und 12.1 des zweiten Übertragungskanals und den Übertragungsblöcken 13.0 und 13.1 des dritten Übertragungskanals zur Datenübertragung zwischen der Basisstation 2 und dem Mobilfunkgerät genutzt werden.

Der weitere zeitliche Ablauf ist schematisch in Fig. 2 dargestellt, wobei zur Erläuterung die drei Übertragungskanäle, die unter Bezugnahme auf Fig. 1 bereits beschrieben wurden, erneut als erster Übertragungskanal 14, zweiter Übertragungskanal 15 und dritter Übertragungskanal 16 dargestellt sind. Mit den Bezugszeichen 14.0, 14.1 usw. bis 14.11 sind die einzelnen Übertragungsblöcke B0ₒ bis B11ₒ des ersten Übertragungskanals 14 bezeichnet. Entsprechend sind die einzelnen Übertragungsblöcke B0₁ bis B11₁ des zweiten Übertragungskanals 15 mit den Bezugszeichen 15.0 bis 15.11 und die Übertragungsblöcke B0₂ bis B11₂ des dritten Übertragungskanals 16 mit den Bezugszeichen 16.0 bis 16.11 bezeichnet.

Für jeden Übertragungskanal 14, 15 und 16 bilden die dargestellten zwölf aufeinander folgenden Übertragungsblöcke 14.0 bis 14.11, 15.0 bis 15.11 und 16.0 bis 16.11 jeweils einen Multiblock des entsprechenden Übertragungskanals 14, 15 bzw. 16. Für jeden der dargestellten Übertragungsblöcke B0ᵢ bis B11ᵢ erfolgt jeweils eine Zuordnung zu einem bestimmten der Mobilfunkgeräte 7 durch ein Adresssignal ADR, das in den Übertragungsblöcken des Downlink-Signals 9 von der Basisstation 2 in einem Header des jeweiligen Übertragungsblocks gesendet wird.

Um ein Maß für die Qualität der Datenauswertung eines Mobilfunkgeräts zu erhalten, wird die Anzahl der von dem Mobilfunkgerät nicht korrekt ausgewerteten Übertragungsblöcke des Downlink-Signals ermittelt. Hierzu werden die entsprechenden Kennzeichnungen, die von dem Mobilfunkgerät auf Anfrage durch die Basisstation an die Basisstation zurückgesendet werden, ausgewertet.

Erfindungsgemäß wird beispielsweise für den Übertragungskanal 14 die Anzahl derjenigen Übertragungsblöcke 14.0 bis 14.11, in denen die Basisstation 2 an das zu testende Mobilfunkgerät sendet, variabel zwischen lediglich einem der Übertragungsblöcke 14.0 bis 14.11 und einem Maximum von allen zwölf Übertragungsblöcken 14.0 bis 14.11 eines Multiblocks des Übertragungskanals 14 festgelegt. Damit lässt sich der Stress, dem das zu testende Mobilfunkgerät ausgesetzt wird, gezielt beeinflussen.

Während durch lediglich vereinzelt das zu testende Mobilfunkgerät adressierende Übertragungsblöcke eine lediglich geringe Belastung für das zu testende Mobilfunkgerät entsteht, da zwischen den einzelnen von dem zu testenden Mobilfunkgeräte durchzuführenden Auswertealgorithmen ein erheblicher Zeitabstand liegt, wird beim Ermitteln der Fehlerrate für beispielsweise den ersten Übertragungskanal 14 mit dem Maximum von 12 Übertragungsblöcken 14.0 bis 14.11 der maximale Stress bei der Auswertung der Übertragungsblöcke 14.0 bis 14.11 verursacht.

Erfindungsgemäß wird die Bestimmung der Fehlerrate nicht nur durch die Auswertung der Anzahl der in dem ersten Übertragungskanal 14 an das zu testende Mobilfunkgerät gesendeten Übertragungsblöcke durchgeführt, sondern zusätzlich unter Verwendung mehrerer Zeitschlitze, das heißt beispielsweise durch Hinzuziehen des zweiten Übertragungskanals 15 und des dritten Übertragungskanals 16 und Senden von an das zu testende Mobilfunkgerät adressierten Übertragungsblöcken auch in diesen Übertragungskanälen. Die Anzahl der verwendeten Übertragungskanäle lässt sich gemäß des erfindungsgemäßen Verfahrens ebenfalls variabel zwischen nur zwei Übertragungskanälen und allen durch die Zeitschlitze der Rahmen festgelegten Übertragungskanäle einstellen. Im einleitend ausgeführten Beispiel für ein Mobilfunksystem sind dies acht Übertragungskanäle für die jeweils acht Zeitschlitze 0 bis 7 der Rahmen. Die Festlegung der Übertragungskanäle, in denen eine Kommunikation zwischen der Basisstation 2 und dem Mobilfunkgerät 8 erfolgt, wird vorzugsweise beim Verbindungsaufbau durchgeführt. Sollen beispielsweise zur Erhöhung der Datenrate mehr Übertragungsblöcke zur Übertragung von Daten von der Basisstation 2 zu dem Mobilfunkgerät 8. verwendet werden, wird eine neue Vereinbarung über die Übertragungskanäle zwischen dem Mobilfunkgerät 8 und der Basisstation 2 getroffen, die dann wiederum bis auf weiteres gilt.

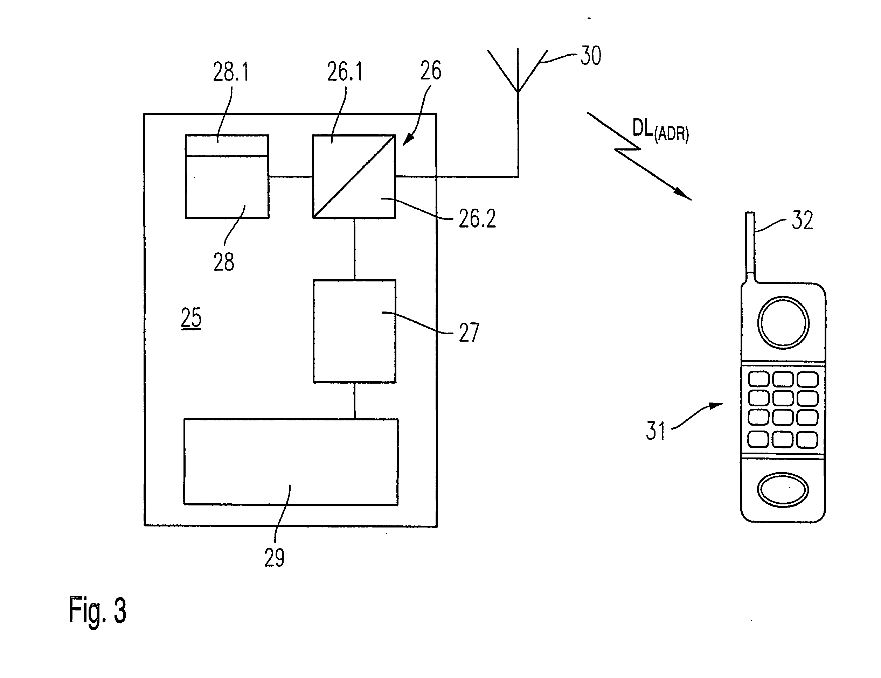

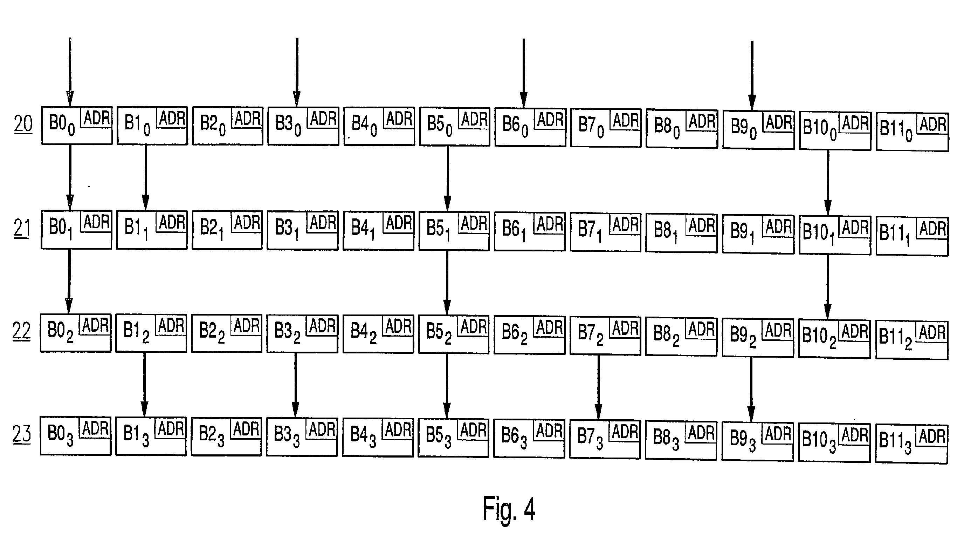

In Fig. 4 ist beispielsweise dargestellt, dass das Mobilfunkgerät, für welches die Fehlerrate ermittelt werden soll, in vier Übertragungskanälen, die stellvertretend durch jeweils einen Multiblock 20, 21, 22 und 23 dargestellt sind, mit einer Basisstation 2, bzw. einem eine Basisstation emulierenden Tester, kommuniziert.
Der schematische Aufbau eines solchen erfindungsgemäßen Testers wird nachfolgend anhand von Fig. 3 noch beschrieben. Während in den ersten zwei Übertragungskanälen 20 und 21, die mit dem Index "0" bzw. "1" in den einzelnen Übertragungsblöcken B0ᵢ bis B11ᵢ gekennzeichnet sind, jeweils vier Übertragungsblöcke an das zu testende Mobilfunkgerät 8 gesendet werden, also ein entsprechendes Adresssignal ADR im Header enthalten, enthaltene die mit "2" bzw. "3" indizierten Übertragungskanäle drei bzw. fünf Übertragungsblöcke, die das zu testende Mobilfunkgerät adressieren. Diejenigen Übertragungsblöcke, in denen Daten von der Basisstation 2 an das zu testende Mobilfunkgerät übertragen werden, sind mit einem Pfeil gekennzeichnet.

Die übrigen Übertragungsblöcke können vorzugsweise Dummy-Daten enthalten, beispielsweise einen vorbestimmten Satz Daten, der keinen Informationsinhalt hat. Dabei kann auch die Zusammengehörigkeit von vier Zeitschlitzen zu einem Übertragungsblock aufgehoben sein. Für die nicht das zu testende Mobilfunkgerät adressierenden Übertragungsblöcke ist prinzipiell jede Maßnahme zulässig, bei der nur sichergestellt ist, dass diese Übertragungsblöcke keine Information zu dem zu testenden Mobilfunkgerät übertragen sollen. So kann beispielsweise auch an ein anderes Mobilfunkgerät gesendet werden oder der Pegel reduziert werden.

Ebenfalls in Fig. 4 ist erfindungsgemäß dargestellt, in unterschiedlichen Übertragungskanälen, für eine identische Anzahl an das Mobilfunkgerät gesendeter Übertragungsblöcke, gleiche Muster zur Anordnung der jeweils an das zu testende Mobilfunkgerät adressierten Übertragungsblöcke zu verwenden. Beispielsweise könnte nicht erfindungsgemäß eine gleichmäßige Anordnung der vier an das zu testende Mobilfunkgerät gesendeten Übertragungsblöcke über die Übertragungsblöcke eines Multiblocks erfolgen, wie dies für den mit 20 bezeichneten Multiblock dargestellt ist.

Die Übertragungsblöcke B0₁ bis B11₁ eines zweiten Multiblocks 21, die an das Mobilfunkgerät gesendet werden, sind dagegen erfindungsgemäß unregelmäßig verteilt. Die Anordnung innerhalb eines Multiblocks erfolgt rein zufällig, wodurch sich eine statistische Verteilung ergibt, die die Wahrscheinlichkeit des Auftretens eines systematischen Fehlers bei der Durchführung der Messung reduziert.

Für einen dritten Multiblock 22 ist wieder eine könnte nicht erfindungsgemäß eine gleichmäßige Verteilung der an das zu testende Mobilfunkgerät gesendeten Übertragungsblöcke dargestellt, wobei die Anzahl der das zu testende Mobilfunkgerät adressierenden Übertragungsblöcke gegenüber den beiden Multiblocks 20 und 21 nicht erfindungsgemäß reduziert ist.

Erfindungsgemäß wird dagegen sowohl die Anzahl als auch die Anordnung der Übertragungsblöcke in den Multiblocks der einzelnen Übertragungskanäle für alle

Übertragungskanäle gleich gewählt.

Insbesondere kann auch für zeitlich nacheinander liegende Multiblocks desselben Übertragungskanals sowohl eine unterschiedliche Anordnung, als auch eine erfindungsgemäß voneinander abweichende Anzahl an Übertragungsblöcken, die das zu testende Mobilfunkgerät adressieren, festgelegt werden. Dies ist insbesondere dann vorteilhaft, wenn die Ermittlung der Fehlerrate für sich ändernde Bedingungen des Mobilfunkgeräts bestimmt werden soll.

Ein erfindungsgemäßer Tester 25 und einer Anordnung mit einem zu testenden Mobilfunkgerät 1 sind in Fig. 3 stark vereinfacht dargestellt. Der erfindungsgemäße Tester 25 weist eine Sende-/Empfangseinrichtung 26 auf, die aus einer Sendeeinrichtung 26.1 zum Senden eines Downlink-Signals und einer Empfangseinrichtung 26.2, zum Empfangen eines von dem zu testenden Mobilfunkgerät 31 über dessen Antenne 32 gesendeten Uplink-Signals vorgesehen ist. Die Übertragung von Daten zwischen dem Mobilfunkgerät 31 und dem Tester 25 erfolgt entweder über die Antennen 30, 32 oder über ein Verbindungskabel.

Von der Empfangseinrichtung 26.2 werden Nachrichtensignale, also auch die Bestätigungssignale "ack" bzw. "nack", die von dem zu testenden Mobilfunkgerät 31 gesendet werden, empfangen. Die Empfangseinrichtung 26.2 ist mit einer Auswerteeinheit 27 verbunden, mit der die Anzahl der korrekt bzw. nicht korrekt ausgewerteten Übertragungsblöcke des Downlink-Signals erfasst wird. Wird nur die Anzahl der korrekt ausgewerteten Übertragungsblöcke ermittelt, so wird die entsprechende Anzahl der nicht korrekt ausgewerteten Übertragungsblöcke errechnet.

Die Auswerteeinheit 27 umfasst dabei ebenfalls eine Recheneinheit, die geeignet ist, aus der Anzahl der nicht korrekt ausgewerteten Übertragungsblöcke eine Fehlerrate für das Mobilfunkgerät 31 zu bestimmen.

Die in der Auswerteeinheit 27 ermittelte Fehlerrate wird dann auf einer Darstellungseinrichtung 29 angezeigt. Die Anzeige auf der Darstellungseinrichtung 29 kann dabei entweder durch Anzeigen eines numerischen Werts erfolgen oder durch eine entsprechende graphische Darstellung. Anstelle der integrierten Darstellungseinrichtung 29, wie sie in der Fig. 3 beispielhaft dargestellt ist, kann die Ausgabe selbstverständlich auch auf einem Bildschirm eines angeschlossenen Computersystems beispielsweise erfolgen.

Zum Festlegen der das zu testende Mobilfunkgerät 31 adressierenden Übertragungsblöcke, ist in dem erfindungsgemäßen Tester 25 weiterhin eine Auswahleinrichtung 28 angeordnet. In der Auswahleinrichtung 28 wird entsprechend den Vorgaben, die ein Bediener des erfindungsgemäßen Testers 25 festlegt, bestimmte, welche Übertragungsblöcke des Downlink-Signals über die Antenne 30 des Testers 25 oder das Verbindungskabel mit einem das zu testende Mobilfunkgerät adressierenden Adresssignal ADR gesendet werden. Unter Bezugnahme auf Fig. 4 wurde hierzu bereits ausgeführt, dass für nacheinander gesendete Multiblocks jeweils eine unterschiedliche Anzahl das zu testende Mobilfunkgerät 31 adressierender Übertragungsblöcke gesendet werden kann, die zudem unterschiedlich innerhalb eines Multiblocks angeordnet sein können.

Die Auswahleinrichtung 28 umfasst daher Mittel 28.1, mit denen ein solchermaßen variabler Stress für das Mobilfunkgerät 31 erzeugt werden kann. Im einfachsten Fall ist hierfür ein Speicher vorgesehen, in dem für jeden der verwendeten Übertragungskanäle ein Profil für die nacheinander gesendeten Multiblocks abgelegt ist, das die Anzahl und die Verteilung der Übertragungsblöcke, die an das zu testende Mobilfunkgerät gesendet werden, festlegt. Zur Ermittlung der Anzahl und der Verteilung der an das zu testende Mobilfunkgerät 31 gesendeten Übertragungsblöcke in nachfolgenden Multiblocks ist es auch denkbar, dass mittels einer Routine in der Auswahleinrichtung 28 aus den vorangegangenen Multiblocks die Anzahl und die Verteilung der das Mobilfunkgerät andressierenden Adresssignale ADR für nachfolgende Multiblocks errechnet wird.

Bei der Durchführung des erfindungsgemäßen Verfahrens zum Ermitteln der Fehlerrate ist es auch möglich, dass die Basisstation 2 bzw. der zur Durchführung verwendete Tester 25 und das zu testende Mobilfunkgerät mit einem Frequenzsprungverfahren miteinander kommunizieren. In einem solchen Fall bezieht sich der Begriff "Übertragungskanal" auf die Verbindung zwischen der Basisstation 2 und dem zu testenden Mobilfunkgerät unter Einbeziehung des Frequenzsprungs. Das heißt, dass der Übertragungskanal dann mit der neuen Trägerfrequenz fortgeführt wird und das Festlegen der Anzahl der Übertragungsblöcke, die das zu testende Mobilfunkgerät adressieren, den jeweiligen Frequenzsprung unberücksichtigt lässt.

## Patentansprüche

1. Verfahren zum Ermitteln einer Fehlerrate bei einer Datenübertragung an ein Mobilfunkgerät (8, 32) , mit folgenden Verfabrensschritten:
- Senden von mehreren Multiblocks (20, 21, 22, 23), die eine feste Anzahl von Übertragungskanälen (B0₀,..., B11₀, B0₁, ..., B11₁, usw.) enthalten, in mehreren Übertragüngskanälen an das zu testende Mobifunkgerät (8, 32), wobei in jedem Übertragüngskanal einige der Übertragungblöcke an das Mobilfünkgerät (8,32) adressiert wind.
- Empfangen und Auswerten der an das zu testende Mobilfunkgerät (8, 32) adressierten Übertragungsblöcke (B0₀, B3₀, B6₀, B9₀; B0₁, B1₁, B5₁, B10₁; B0₂, B5₂, B10₂; B1₃, B3₃, B5₃, B7₃, B9₃) durch das zu testende Mobilfunkgerät (8, 32),
- Senden einer ersten oder einer zweiten Kennzeichnung ("ack", "nack") durch das zu testende Mobilfunkgerät (8, 32) für einen korrekt ausgewerteten Übertragungsblock bzw. einen nicht korrekt ausgewerteten Übertragungsblock,
- Bestimmen der Anzahl von Übertragungsblöcken, die an das zu testende Mobilfunkgerät (8, 32) gesendet und adressiert wurden und die durch das zu testende Mobilfunkgerät (8, 32) nicht korrekt ausgewertet wurden, auf Basis der ersten oder zweiten Kennzeichnung ("ack", "nack")
- Bestimmen einer Fehlerrate aus der Anzahl der nicht korrekt ausgewerteten Übertragungsblöcke in Relation zu der Zahl der insgesamt an das Mobilfunkgerät (8, 32) gesendeten und adressierten Übertragungsblöcke (B0₀, B3₀, B6₀, B9₀; B0₁, B1₁, B5₁, B10₁; B0₂, B5₂, B10₂; B1₃, B3₃, B5₃, B7₃, B9₃) ;
**dadurch gekennzeichnet, dass**
eine Anzahl von Übertragungsblöcken (B0₀, ..., B11₀, B0₁, ..., B11₁, usw.) pro Multiblock (20, 21, 22, 23). festgelegt wird, die an das Mobilfunkgerät (8, 32) adressiert werden, wobei für zeitlich nacheinander liegende Multiblocks (20, 21, 22, 23) eines Übertragungskanals (14, 15, 16) die Anzahl der an das Mobilfunkgerät (8, 32) gesendeten und adressierten Übertragungsblöcke (B0₀, B3₀, B6₀, B9₀; B0₁, B1₁, B5₁, B10₁; B0₂, B5₂, B10₂; B1₃, B3₃, B5₃, B7₃, B9₃) verändert und unterschiedichen festgelegt wird, und für jeden der Übertragungskanäle (14, 15, 16) die Anzahl und Anordnung der Übertragungsblöcke (B0₀, B3₀, B6₀, B9₀; B0₁, B1₁, B5₁, B10₁; B0₂, B5₂, B10₂; B1₃, B3₃, B5₃, B7₃, B9₃), die an das zu testende Mobilfunkgerät (8, 32) gesendet und adressiert werden, gleich festgelegt wird und die Anordnung der Übertragungsblöcke (B0, B1₁, B5₁, B10₁) innerhalb eines Multiblocks (21) zufällig erfolgt.

2. Verfahren nach Anspruch 1,
**dadurch gekennzeichnet,**
**dass** an das zu testende Mobilfunkgerät (8, 32) jeweils ein oder mehrere Ubertragungsblöcke mehrerer Übertragungskanäle (14, 15, 16) gesendet und adressiert werden.

3. Verfahren nach Anspruch 1 oder 2,
**dadurch gekennzeichnet,**
**dass** für jeden Übertragungskanal (14, 15, 16), den das zu testende Mobilfunkgerät (8, 32) nutzt, an das Mobilfunkgerät (8, 32) zumindest ein Übertragungsblock (B0₀, ..., B11₀; B0₁, ... B11₁; B0₂, ..., B11₂; ...) eines Multiblocks (20, 21, 22, 23) gesendet und adressiert wird.

4. Tester zum Ermitteln einer Fehlerrate bei einer Datenübertragung an ein Mobilfunkgeräte (8, 32) aus einer Anzahl von nicht korrekt ausgewerteten Übertragungsblöcke in Relation zu einer Zahl der insgesamt an das Mobilfunkgerät (8, 32) gesendeten und adressierten Übertragungsblöcke, mit einer Sendeeinrichtung (26.1) zum Senden von mehreren Multiblocks (20, 21, 22, 23), die eine feste Anzahl von Übertragungsblöcken (B0₀,B3₀,B6₀,B9₀,B0₁,B1₁,B5₁,B10₁,B0₂,B5₂,B10₂,B1₃,B3₃,B5₃,B7₃,B9₃) enthalten in mehreren Übertragungskanälen, an das zu testende Mobilfunkgerät (8, 32) wobei einige der Übertragungsblöcke jedes Übertragüngskanals an das Mobilfünkgerät (8, 32) adressiert sind, und einer Empfangseinrichtung (26.2) zum Empfangen von von dem zu testenden, Mobilfunkgerät (8, 32) gesendeten ersten und/oder zweiten Kennzeichnungen ("ack", "nack"), eine Auswerteeinrichtung (27) zum Bestimmen der Anzahl der von dem zu testenden Mobilfunkgerät (8, 32) nicht korrekt ausgewerteten Übertragungsblöcke aus den empfangenen ersten oder zweiten Kennzeichnungen ("ack", "nack") und zum Bestimmen einer Fehlerrate aus der Anzahl der nicht korrekt ausgewerteten Übertragungsblöcke in Relation zu der Zahl der insgesamt an das Mobilfunkgerät (8, 32) gesendeten und adressierten Übertragungsblöcke,
**dadurch gekennzeichnet, dass** der Tester weiterhin aufweist,
eine Auswahleinrichtung (28) zum variablen Festlegen der Anzahl an Übertragungsblöcken (B0₀,...., B11₀; B0₁,..., B11₁; B0₂,..., B11₂; B0₃,..., B11₃) eines Multiblocks (20, 21, 22, 23), die das zu testende Mobilfunkgerät (8, 32) adressierten, zwischen einem Übertragungsblock pro Multiblock (20, 21, 22, 23) und allen Übertragungsblöcken (B0₀, ... , B11₀; B0_{1,} ..., B11₁; B0₂,..., B11₂; B0₃**,** ....., B11₃) pro Multiblock (20, 21, 22, 23), wobei die Auswahleinrichtung so gewählt ist, dass die Anzahl der Übertragungsblöcke (B0₀, B3₀, B6₀, B9₀; B0₁, B1₁, B5₁, B10₁; B0₂, B5₂, B10₂; B1₃, B3₃, B5₃, B7₃, B9₃), die das zu testende Mobilfunkgerät (8, 32) adressieren, für zeitlich nacheinander liegende Multiblocks (20, 21, 22, 23) eines Übertragungskanals verandert und unterschiedlich festgelegt ist und die Auswahlvorrichtung (28) Mittel (28.1) zum gleichen Festlegen der Anzahl und der Anordnung der Übertragungsblöcke (14.0,..., 14.11; 15.0,..., 15.11; 16.0, ..., 16.11), die das zu testende Mobilfunkgerät (8, 32) adressieren, für jeden der Übertragungskanäle (14, 15, 16) umfasst, wobei die Anordnung der Übertragungsblöcke (B0, B1₁, B5₁, B10₁) innerhalb eines Multiblocks (21) zufällig erfolgt.

5. Tester nach Anspruch 4,
**dadurch gekennzeichnet,**
**dass** die Auswahlvorrichtung (28) Mittel (28.1) umfasst, die an das zu testende Mobilfunkgerät (8, 32) einen oder mehrere Übertragungsblöcke (14.0, ...14.11; 15.0,..., 15.11; 16.0,..., 16.11) mehrerer Übertragungskanäle (14, 15, 16) adressieren.

## Claims

1. Method for determining an error rate in a data transmission to a mobile-radio device (8, 32), with the following procedural stages:
- transmission of several multiblocks (20, 21, 22, 23), which contain a fixed number of transmission blocks (B0₀, ..., B11₀, B0₁, ..., B11₁, etc.), in several transmission channels to the mobile-radio device under test (8, 32), wherein, in each transmission channel, some of the transmission blocks are addressed to the mobile-radio device (8, 32);
- reception and evaluation of the transmission blocks (B0₀, B3₀, B6₀, B9₀; B0₁, B1₁, B5₁, B10₁; B0₂, B5₂, B10₂; B1₃, B3₃, B5₃, B7₃, B9₃) addressed to the mobile-radio device under test (8, 32) by the mobile-radio device under test (8, 32);
- transmission of a first or a second designation ("ack", "nack") by the mobile-radio device under test (8, 32) for a correctly-evaluated transmission block or respectively for an incorrectly-evaluated transmission block;
- determination of the number of transmission blocks, which have been transmitted and addressed to the mobile-radio device under test (8, 32) and which have been incorrectly evaluated by the mobile-radio device under test (8, 32) on the basis of the first or second acknowledgement ("ack", "nack");
- determination of an error rate from the number of incorrectly-evaluated transmission blocks relative to the number of transmission blocks (B0₀, B3₀, B6₀, B9₀; B0₁, B1₁, B5₁, B10₁; B0₂, B5₂, B10₂; B1₃, B3₃, B5₃, B7₃, B9₃) transmitted and addressed to the mobile-radio device (8, 32) in total;
**characterised in that**
a number of transmission blocks (B0₀, ..., B11₀, B0₁, ..., B11₁, etc.) per multiblock (20, 21, 22, 23) is specified, which are addressed to the mobile-radio device (8, 32), wherein, for multiblocks (20, 21, 22, 23) of one transmission channel (14, 15, 16) disposed in time succession, the number of transmission blocks (B0₀, B3₀, B6₀, B9₀; B0₁, B1₁, B5₁, B10₁; B0₂, B5₂, B10₂; B1₃, B3₃, B5₃, B7₃, B9₃) transmitted and addressed to the mobile-radio device (8, 32) is varied and differently specified and, for every one of the transmission channels (14, 15, 16), the number and arrangement of the transmission blocks (B0₀, B3₀, B6₀, B9₀; B0₁, B1₁, B5₁, B10₁; B0₂, B5₂, B10₂; B1₃, B3₃, B5₃, B7₃, B9₃), which are transmitted and addressed to the mobile-radio device under test (8, 32), is identically specified, and the arrangement of the transmission blocks (B0, B1₁, B5₁, B10₁) within a multi-block (21) is implemented in a random manner.

2. Method according to claim 1,
**characterised in that**, in each case, one or more transmission blocks of several transmission channels (14, 15, 16) are transmitted and addressed to the mobile-radio device under test (8, 32).

3. Method according to claim 1 or 2,
**characterised in that**,
for every transmission channel (14, 15, 16), which the mobile-radio device under test (8, 32) uses, at least one transmission block (B0₀, ..., B11₀, B0₁, ..., B11₁, B0₂, ..., B11₂; ...) of a multiblock (20, 21, 22, 23) is transmitted and addressed to the mobile-radio device (8, 32).

4. Tester for determining an error rate in a data transmission to a mobile-radio device (8, 32) from a number of incorrectly-evaluated transmission blocks relative to a number of transmission blocks transmitted and addressed to the mobile-radio device (8, 32) in total, with
a transmission device (26.1) for the transmission of several multiblocks (20, 21, 22, 23), which contain a fixed number of transmission blocks (B0₀, B3₀, B6₀, B9₀; B0₁, B1₁, B5₁, B10₁; B0₂, B5₂, B10₂; B1₃, B3₃, B5₃, B7₃, B9₃) in several transmission channels to the mobile-radio device under test (8, 32), wherein some of the transmission blocks of every transmission channel are addressed to the mobile-radio device (8, 32), and
a reception device (26.2) for the reception of first and/or second designations ("ack", "nack") transmitted from the mobile-radio device under test (8, 32),
an evaluation device (27) for determining the number of transmission blocks incorrectly evaluated by the mobile-radio device under test (8, 32) from the received first or second designations ("ack", "nack") and for determining an error rate from the number of incorrectly-evaluated transmission blocks relative to the number of transmission blocks transmitted and addressed to the mobile-radio device (8, 32) in total,
**characterised in that**
the tester also provides
a selection device (28) for the variable specification of the number of transmission blocks (B0_{0,} ..., B11₀, B0₁, ..., B11₁, B0₂, ..., B11₂, B0₃, ..., B11₃) of a multiblock (20, 21, 22, 23), which address the mobile-radio device under test (8, 32), between one transmission block per multiblock (20, 21, 22, 23) and all transmission blocks (B0₀, ..., B11₀, B0₁, ..., B11₁, B0₂, ..., B11₂, B0₃, ..., B11₃) per multiblock (20, 21, 22, 23), wherein the selection device is selected in such a manner that the number of transmission blocks (B0₀, B3₀, B6₀, B9₀; B0₁, B1₁, B5₁, B10₁; B0₂, B5₂, B10₂; B1₃, B3₃, B5₃, B7₃, B9₃), which address the mobile-radio device under test (8, 32) is varied and differently specified for multiblocks (20, 21, 22, 23) of one transmission channel disposed in time succession, and the evaluation device (28) provides means (28.1) for the identical specification of the number and the arrangement of transmission blocks (14.0,..., 14.11; 15.0,..., 15.11; 16.0,..., 16.11), which address the mobile-radio device under test (8, 32), for every one of the transmission channels (14, 15, 16), wherein the arrangement of the transmission blocks (B0, B1₁, B5₁, B10₁) within one multiblock (21) is implemented in a random manner.

5. Tester according to claim 4,
**characterised in that**
the selection device (28) provides means (28.1), which address one or more transmission blocks (14.0,..., 14.11; 15.0,..., 15.11; 16.0,..., 16.11) of several transmission channels (14, 15, 16) to the mobile-radio device under test (8, 32).

## Revendications

1. Procédé pour déterminer un taux d'erreurs dans une transmission de données à un appareil de radiotéléphonie mobile (8, 32), avec les étapes de procédé suivantes:
- émission de plusieurs multiblocs (20, 21, 22, 23) qui contiennent un nombre fixe de blocs de transmission (B0₀, ..., B11₀, B0₁, ..., B11₁, etc), dans plusieurs canaux de transmission à l'appareil de téléphonie mobile à tester (8, 32), où sont adressés dans chaque canal de transmission quelques-uns des blocs de transmission à l'appareil de téléphonie mobile (8, 32);
- réception et évaluation des blocs de transmission (B0₀, B3₀, B6₀, B9₀; B0₁, B1₁, B5₁, B10₁; B0₂, B5₂, B10₂; B1₃, B3₃, B5₃, B7₃, B9₃) adressés à l'appareil de téléphonie mobile à tester (8, 32), par l'appareil de téléphonie mobile à tester (8, 32),
- émission d'une première ou d'une deuxième caractérisation ("ack", "nack") par l'appareil de téléphonie mobile à tester (8, 32) pour un bloc de transmission évalué correctement respectivement un bloc de transmission non évalué correctement,
- détermination du nombre de blocs de transmission qui ont été envoyés et adressés à l'appareil de téléphonie mobile à tester (8, 32) et qui n'ont pas été évalués correctement par l'appareil de téléphonie mobile à tester (8, 32), sur la base de la première ou deuxième caractérisation ("ack", "nack");
- détermination d'un taux d'erreurs à partir du nombre des blocs de transmission non évalués correctement par rapport au nombre des blocs de transmission (B0₀, B3₀, B6₀, B9₀; B0₁, B1₁, B5₁, B10₁; B0₂, B5₂, B10₂; B1₃, B3₃, B5₃, B7₃, B9₃) envoyés et adressés en tout à l'appareil de téléphonie mobile (8, 32);
**caractérisé en ce que**
un nombre de blocs de transmission (B0₀, ..., B11₀, B0₁, ..., B11₁, etc.) par multibloc (20, 21, 22, 23) est fixé qui sont adressés à l'appareil de téléphonie mobile (8, 32), où pour des multiblocs situés dans le temps les uns derrière les autres (20, 21, 22, 23) d'un canal de transmission (14, 15, 16), le nombre des blocs de transmission (B0₀, B3₀, B6₀, B9₀; B0₁, B1₁, B5₁, B10₁; B0₂, B5₂, B10₂; B1₃, B3₃, B5₃, B7₃, B9₃) envoyés et adressés à l'appareil de téléphonie mobile (8,32) est modifié et est fixé différemment, et pour chacun des canaux de transmission (14, 15, 16), le nombre et l'agencement des blocs de transmission (B0₀, B3₀, B6₀, B9₀; B0₁, B1₁, B5₁, B10₁; B0₂, B5₂, B10₂; B1₃, B3₃, B5₃, B7₃, B9₃), qui ont été envoyés et adressés à l'appareil de téléphonie mobile à tester (8, 32) est fixé d'une manière identique, et l'agencement des blocs de transmission (B0, B1₁, B5₁, B10₁) à l'intérieur d'un multibloc (21) a lieu d'une manière aléatoire.

2. Procédé selon la revendication 1, **caractérisé en ce que** sont envoyés et adressés à l'appareil de téléphonie mobile à tester (8, 32) à chaque fois un ou plusieurs blocs de transmission de plusieurs canaux de transmission (14, 15, 16).

3. Procédé selon la revendication 1 ou 2, **caractérisé en ce que** pour chaque canal de transmission (14, 15, 16) utilisé par l'appareil de téléphonie mobile à tester (8, 32), au moins un bloc de transmission (B0₀, ..., B11₀; B0₁, ... B11₁; B0₂, ... , B11₂; ... ) d'un multibloc (20, 21, 22, 23) est envoyé et adressé à l'appareil de téléphonie mobile (8, 32).

4. Testeur pour déterminer un taux d'erreurs dans une transmission de données à un appareil de téléphonie mobile (8, 32) à partir d'un nombre de blocs de transmission non évalués correctement par rapport à un nombre des blocs de transmission envoyés et adressés en tout à l'appareil de téléphonie mobile (8, 32), avec une installation d'émission (26.1) pour l'émission de plusieurs multiblocs (20, 21, 22, 23) qui contiennent un nombre fixe de blocs de transmission (B0₀, B3₀, B6₀, B9₀; B0₁, B1₁, B5₁, B10₁; B0₂, B5₂, B10₂; B1₃, B3₃, B5₃, B7₃, B9₃), dans plusieurs canaux de transmission, où quelques-uns des blocs de transmission de chaque canal de transmission sont adressés à l'appareil de téléphonie mobile (8, 32), et une installation de réception (26.2) pour la réception de la première et/ou deuxième caractérisation ("ack", "nack") transmise par l'appareil de téléphonie à tester (8, 32), une installation d'évaluation (27) pour déterminer le nombre des blocs de transmission non évaluées correctement par l'appareil de téléphonie mobile à tester (8, 32) à partir des première ou deuxième caractérisation ("ack", "nack") et pour déterminer un taux d'erreurs à partir du nombre des blocs de transmission non évalués correctement par rapport au nombre des blocs de transmission transmis et adressés en tout à l'appareil de téléphonie mobile (8, 32),
**caractérisé en ce que** le testeur présente en outre
une installation de sélection (28) pour déterminer variablement le nombre de blocs de transmission (B0₀, ..., B11₀; B0₁, ..., B11₁; B0₂, ..., B11₂; B0₃,...,B11₃) d'un multibloc (20, 21, 22, 23), qui adressent l'appareil de téléphonie mobile à tester (8, 32), entre un bloc de transmission par multibloc (20, 21, 22, 23) et tous les blocs de transmission (B0₀, ..., B11₀; B0₁, ..., B11₁; B0₂, ..., B11₂; B0₃,..., B11₃) par multibloc (20, 21, 22, 23), où l'installation de sélection est sélectionnée de façon que le nombre de blocs de transmission (B0₀, B3₀, B6₀, B9₀; B0₁, B1₁, B5₁, B10₁; B0₂, B5₂, B10₂; B1₃, B3₃, B5₃, B7₃, B9₃) , qui adressent l'appareil de téléphonie mobile à tester (8, 32) est modifiable et fixé différemment pour des multiblocs (20, 21, 22, 23) situés dans le temps les uns derrière les autres d'un canal de transmission, et le dispositif de sélection (28) comprend des moyens (28.1) pour la même détermination du nombre et de l'agencement des blocs de transmission (14,0, ..., 14,11; 15,0, ..., 15,11; 16,0, ..., 16,11) qui adressent l'appareil de téléphonie mobile à tester (8, 32), pour chacun des canaux de transmission (14, 15, 16), où l'agencement des blocs de transmission (B₀, B1₁, B5₁, B10₁) a lieu d'une manière aléatoire à l'intérieur d'un multibloc (21).

5. Testeur selon la revendication 4,
**caractérisé en ce que**
le dispositif de sélection (28) comprend des moyens (28.1) qui adressent à l'appareil de téléphonie mobile à tester (8, 32) un ou plusieurs blocs de transmission (14,0, ...14,11; 15,0, ..., 15,11; 16,0, ..., 16,11) de plusieurs canaux de transmission (14, 15, 16).
